# EUROPEAN PATENT SPECIFICATION

(11) **EP 4 012 965 B1**
(45) Date of publication and mention of the grant of the patent: **14.02.2024**
(21) Application number: 20873005.1
(22) Date of filing: 21.09.2020
(51) Int. Cl.: H04L 5/00

(54) **CHANNEL INDICATION SENDING METHOD, CHANNEL SCANNING METHOD, AND DEVICE**
KANALANZEIGESENDEVERFAHREN, KANALABTASTVERFAHREN UND VORRICHTUNG
PROCÉDÉ D'ENVOI D'INDICATION DE CANAL, PROCÉDÉ DE BALAYAGE DE CANAL ET DISPOSITIF

(30) Priority: 30.09.2019 CN 201910937941
(43) Date of publication of application: 15.06.2022
(73) Proprietor: Huawei Technologies Co., Ltd., Longgang District Shenzhen, Guangdong 518129 (CN)
(72) Inventor: MA, Zhi, Shenzhen, Guangdong 518129 (CN); YU, Juzheng, Shenzhen, Guangdong 518129 (CN); BAI, Xiaofei, Shenzhen, Guangdong 518129 (CN); DING, Guozhi, Shenzhen, Guangdong 518129 (CN)
(74) Representative: Goddar, Heinz J.
(86) International application number: PCT/CN2020/116533
(87) International publication number: WO 2021/063205

(56) References cited:
- CN-A- 105 307 186
- CN-A- 110 268 735
- US-A1- 2017 142 728
- US-A1- 2017 150 368
- US-A1- 2018 199 342
- US-A1- 2018 359 730
- US-A1- 2019 223 213
- US-B1- 9 439 197
- ZTE: "Considerations on Measurements for LAA", 3GPP Draft; R1-144827 measurements for LAA_final, 21 November 2014 (2014-11-21), XP050885499,

## Description

### TECHNICAL FIELD

This application relates to the field of wireless communication technologies, and in particular, to a channel indication sending method, a channel scanning method, and an apparatus.

### BACKGROUND

Operating frequency bands of a wireless local area network (WLAN) include the 5 GHz frequency band. The 5 GHz frequency band is an unlicensed frequency band. Countries and regions may deploy various radars such as weather radars and military radars on some channels (channel) of the frequency band. Therefore, these channels are referred to as radar channels. A radar channel is used by a WLAN device in a communication network. Therefore, to avoid a conflict caused when the radar channel is simultaneously used by the WLAN device and the various radars, the WLAN protocol specifies that:
1. Channels of radars deployed by countries and regions are dynamic frequency selection (DFS) channels.
2. An access point (AP) in the WLAN device needs to be silent for one minute before operating on a DFS channel. If the AP does not find a radar within the one minute, that is, the DFS channel is not used by the radar, the AP is allowed to formally use the DFS channel. This process is referred to as channel availability check (CAC). The AP can send a beacon frame on the DFS channel only after the CAC succeeds.
3. The AP operating on the DFS channel needs to perform CAC in real time. Once a radar signal is detected, the AP needs to switch to another channel within 10 seconds to ensure that the radar preferentially uses the DFS channel.

After various behaviors of the AP are specified in the foregoing protocol, behaviors of a station (STA) associated with the AP are affected. Specifically, after accessing the WLAN, the STA is associated with an AP by using a basic service set (BSS). The STA further scans another channel, so that the STA is associated with another AP when communication quality of the current BSS deteriorates.

After switching to the DFS channel, the STA needs to scan the DFS channel. The CAC performed by the AP on the DFS channel may fail, that is, the AP fails to complete the CAC on the DFS channel, or the AP detects a radar in the 1-minute silent period. As a result, the STA fails to scan the DFS channel, and the STA switching to the DFS channel wastes air interface resources.

US 2017/150368 A1 discloses wireless networks and more specifically to systems and methods for determining the location of distributed radar detectors and selecting available channels free of radar signals from a plurality of radio frequency channels. One embodiment includes a cloud DFS super master and a radar detector communicatively coupled to the cloud DFS super master. The cloud DFS super master is programmed to receive the results of the scan for a radar signal from the radar detector and to generate integrated client device geolocation information. The cloud DFS super master is also programmed to determine a location for the radar detector based at least on the integrated client device geolocation information, and determine a radio channel free of the radar signal based at least on the location for the radar detector and the results of the scan for the radar signal.

US 2018/199342 A1 discloses a method, an apparatus, and a computer-readable medium for wireless communication are provided. An apparatus is configured to communicate over a primary channel via a first set of antennas and over the primary via a second set of antennas. The second set of antennas is switched from the primary channel to a secondary channel when the communication over the primary channel is idle. A channel availability checks (CACs) is performed on the secondary channel when the primary channel is idle to determine whether radar signals are detected on the secondary channel.

### SUMMARY

The present invention is defined by the appended set of claims. Preferred embodiments are defined by the dependent claims. This application provides a channel indication sending method, to resolve a problem that a STA fails to scan a DFS channel on which CAC is not completed. Specifically, this application discloses the following technical solutions.

According to a first aspect, this application provides a channel indication sending method. The method may be applied to a first access point, and the first access point is associated with a station. The method includes: The first access point receives channel information from a second access point. The channel information indicates that an operating channel of the second access point is a first channel, and whether the second access point successfully performs CAC on the first channel. The second access point is a neighbor of the first access point, and the first channel is a DFS channel.

The first access point sends, on a second channel, a WLAN frame to a station associated with the first access point. The second channel is an operating channel of the first access point. The WLAN frame includes an indication about the first channel and an indication of whether the second access point successfully performs the CAC on the first channel.

If it indicates that the CAC on the first channel succeeds, the station switches to the first channel and scans the first channel.

According to the method provided in this aspect, the first access point sends a channel indication to the station associated with the first access point, to indicate whether the neighbor second access point successfully performs CAC on the DFS channel. In this case, the station can scan, only after the second access point successfully performs the CAC, the DFS channel on which the second access point is located. This avoids a waste of air interface resources caused by switching by the station to a DFS channel on which CAC fails. This method increases a success rate of scanning a DFS channel by the station, and further saves air interface resources.

Optionally, the first channel is in a channel report information element.

Optionally, the channel report information element includes a vendor-specific field. Further, the vendor-specific field is used to indicate whether the second access point successfully performs the CAC on the first channel.

Further, if content carried in the field is "1", it indicates that the CAC succeeds. If the content carried in the field is "0", it indicates that the CAC fails. Still further, the CAC failure includes the following two cases:

In one case, the second access point fails to complete the CAC on the DFS channel and is still in a 1-minute silent period.

In another case, the second access point completes the CAC on the DFS channel and finds a radar during the 1-minute silent period.

According to a second aspect, this application provides a channel scanning method. The method may be applied to a station, and the station is associated with a first access point. Specifically, the method includes:

The station receives a WLAN frame from a first access point. The WLAN frame includes an indication about a first channel on which a second access point operates and an indication of whether the second access point successfully performs CAC on the first channel, and the first channel is a DFS channel.

The station scans, based on the indication about the first channel and the indication of whether the CAC succeeds, the first channel only if the second access point successfully performs the CAC on the first channel.

Optionally, the first channel is in a channel report information element.

With reference to the second aspect, in a possible implementation of the second aspect, the scanning, by the station, the first channel includes: The station sends a probe request on the DFS channel immediately after the station switches to the DFS channel on which the CAC succeeds.

In addition, the method further includes: The station receives a probe response returned by the second access point. After receiving the probe response, the station completes scanning on the DFS channel and returns to the second channel. The second channel is an operating channel of the first access point.

In the method, when the WLAN frame sent by the first access point indicates that the CAC succeeds, the station switches to the DFS channel on which the second access point is located, immediately sends a probe request frame, and starts to scan the DFS channel. This reduces waiting time during which the station can start to send a probe request frame only after receiving a beacon frame on the DFS channel. The method significantly shortens dwell time of the station on the DFS channel, so that the station can return to the original operating channel after scanning the DFS channel. This avoids frame freezing of audio or video caused by long dwell time of the station on the DFS channel.

According to a third aspect (which is not a part of the claimed invention), this application provides a channel indication sending method. The method may be applied to a first access point, and the first access point is associated with a station. The method includes:

The first access point receives channel information from at least one neighbor access point whose operating channel is a DFS channel. The channel information from each neighbor access point is used to indicate an operating channel of a corresponding access point, and whether the corresponding access point successfully performs CAC.

The first access point sends a channel list to the station associated with the first access point. The channel list includes only an indication about an operating channel of a neighbor access point that successfully performs CAC and an indication about an operating channel of a neighbor access point whose operating channel is a non-DFS channel.

In this embodiment, for a station associated with a neighbor access point that fails to perform CAC, the first access point sends, to the station only after the neighbor access point successfully performs the CAC, an indication about a DFS channel on which the corresponding access point is located, instead of delivering an indication about an operating channel to the station. This avoids a waste of air interface resources caused by switching by the station to a DFS channel on which CAC fails, and increases a success rate of scanning a DFS channel by the station.

In addition, in this method, compared with carrying, in a WLAN frame, an indication of whether the neighbor access point successfully performs CAC on a DFS channel, delivering, by the first access point, only an indication about a DFS channel on which CAC succeeds reduces content carried in a message. In this way, transmission overheads are reduced, a DFS channel scanning procedure is simplified, and channel scanning efficiency is further improved.

According to a fourth aspect (which is not part of the claimed invention), this application provides a channel indication sending apparatus. The apparatus may be used as a first access point, and the apparatus includes a receiving unit and a sending unit.

The receiving unit is configured to receive channel information from a second access point. The channel information indicates that an operating channel of the second access point is a first channel, and whether the second access point successfully performs CAC on the first channel, the second access point is a neighbor of the first access point, and the first channel is a DFS channel.

The sending unit is configured to send, on a second channel, a WLAN frame to a station associated with the first access point. The second channel is an operating channel of the first access point. The WLAN frame includes an indication about the first channel and an indication of whether the second access point successfully performs the CAC on the first channel.

Optionally, the first channel is in a channel report information element.

According to a fifth aspect (which is not part of the claimed invention), this application provides a channel scanning apparatus. The apparatus may be used as a station, and the apparatus includes a receiving unit and a processing unit.

The receiving unit is configured to receive a WLAN frame from a first access point. The WLAN frame includes an indication about a first channel on which a second access point operates and an indication of whether the second access point successfully performs CAC on the first channel, and the first channel is a DFS channel.

The processing unit is configured to scan, based on the indication about the first channel and the indication of whether the CAC succeeds, the first channel only if the second access point successfully performs the CAC on the first channel.

With reference to the fifth aspect, in a possible implementation of the fifth aspect, the processing unit is specifically configured to send a probe request on the DFS channel immediately after the station switches to the DFS channel on which the CAC succeeds.

According to a sixth aspect (which is not a part of the claimed invention), this application provides a channel indication sending apparatus. The apparatus may be used as a first access point. The apparatus includes a receiving unit and a sending unit, and may further include a processing unit, a storage unit, and the like.

The receiving unit is configured to receive channel information from at least one neighbor access point whose operating channel is a DFS channel. The channel information from each neighbor access point is used to indicate an operating channel of a corresponding access point, and whether the corresponding access point successfully performs CAC. The sending unit is configured to send a channel list to a station associated with the first access point. The channel list includes only an indication about an operating channel of a neighbor access point that successfully performs CAC and an indication about an operating channel of a neighbor access point whose operating channel is a non-DFS channel.

According to a seventh aspect (which is not a part of the claimed invention), this application further provides a communication apparatus. The communication apparatus may be an access point or a station. The communication apparatus includes a transceiver, a processor, and a memory.

The memory is configured to store program instructions. The processor is configured to invoke the program instructions in the memory, and control the transceiver to perform, according to the program instructions, the method in any one of the first aspect to the third aspect or the implementations of the second aspect.

Further, when the communication apparatus is a first access point, the channel indication sending method in the first aspect or the third aspect is performed by executing the program instructions.

When the communication apparatus is a station, the channel scanning method in either the second aspect or the implementations of the second aspect is performed by executing the program instructions.

According to an eighth aspect, this application further provides an access point, wherein the access point is a first access point, and the first access point comprises: a first transceiver, configured to receive channel information from a second access point, wherein the channel information indicates that an operating channel of the second access point is a first channel, and whether the second access point successfully performs channel availability check, CAC, on the first channel, wherein the second access point is a neighbor of the first access point, and the first channel is a dynamic frequency selection, DFS, channel; and a second transceiver, configured to send, on a second channel, a WLAN frame to a station associated with the first access point, wherein the second channel is an operating channel of the first access point, and the wireless local area network, WLAN, frame comprises an indication about the first channel and an indication of whether the second access point successfully performs the CAC on the first channel.

According to a ninth aspect, this application further provides a computer-readable storage medium. The storage medium stores instructions. When the instructions are run on a computer or a processor, the method in any one of the first aspect and second aspect or the implementations of the first aspect and second aspect may be performed.

In addition, this embodiment further provides a computer program product. The computer program product includes computer instructions. When the instructions are executed by a computer or a processor, the method in any one of the first aspect to the third aspect or the implementations of the second aspect may be performed.

According to a tenth aspect, an embodiment further provides a station. The station includes a third transceiver, configured to receive a wireless local area network, WLAN, frame from a first access point, wherein the WLAN frame comprises an indication about a first channel on which a second access point operates and an indication of whether the second access point successfully performs channel availability check, CAC, on the first channel, and the first channel is a dynamic frequency selection, DFS, channel; and a processor, configured to scan, based on the indication about the first channel and the indication of whether the CAC succeeds, the first channel only if the second access point successfully performs the CAC on the first channel.

Each access point or station may be the communication apparatus in the seventh aspect, and the communication apparatus is configured to implement the method in any one of the first aspect to the third aspect or the implementations of the second aspect.

According to an eleventh aspect, an embodiment further provides a communication system. The communication system includes: a first access point according to; a second access point, wherein the second access point is a neighbor of the first access point and a channel on which the second access point is located is a DFS channel; and a station.

### BRIEF DESCRIPTION OF DRAWINGS

FIG. 1 is a schematic diagram of a structure of a WLAN system according to an embodiment of this application;
FIG. 2 is a signaling flowchart of a channel indication sending method according to an embodiment of this application;
FIG. 3 is a schematic diagram of a format of an AP channel report information element according to an embodiment of this application;
FIG. 4 is a signaling flowchart of channel scanning by a STA according to an embodiment of this application;
FIG. 5 is a block diagram of a structure of an apparatus according to an embodiment of this application;
FIG. 6 is a schematic diagram of a structure of an access point according to an embodiment of this application; and
FIG. 7 is a schematic diagram of a structure of a station according to an embodiment of this application.

### DESCRIPTION OF EMBODIMENTS

Before technical solutions in the embodiments of this application are described, an application scenario of the embodiments of this application is first described with reference to the accompanying drawings.

The technical solutions of this application may be applied to a WLAN system. The WLAN system includes at least two radio access network devices and at least one terminal device. In addition, the system may further include other network devices, for example, may further include a control device, a relay device, and a wireless backhaul device.

The terminal device is connected to a wireless access point (AP) device in a wireless manner, and the radio access network devices are connected to the control device by using a network (for example, a local area network, a core network, or the Internet). The control device and the radio access network devices may be different independent physical devices, functions of the control device and logical functions of the radio access network devices may be integrated into one physical device, or some functions of the control device and some functions of the radio access network devices may be integrated into one physical device. The terminal device may be at a fixed location, or may be mobile. The control device may control the AP device. For example, the control device is an access controller (AC). The terminal device is a WLAN terminal. For example, the terminal includes a station (STA).

The radio access network devices and the terminal device may communicate with each other by using an unlicensed spectrum. The unlicensed spectrum may be the 5-gigahertz (GHz) frequency band, or may be another frequency band. A spectrum resource used between the network device and the terminal device is not limited in the embodiments.

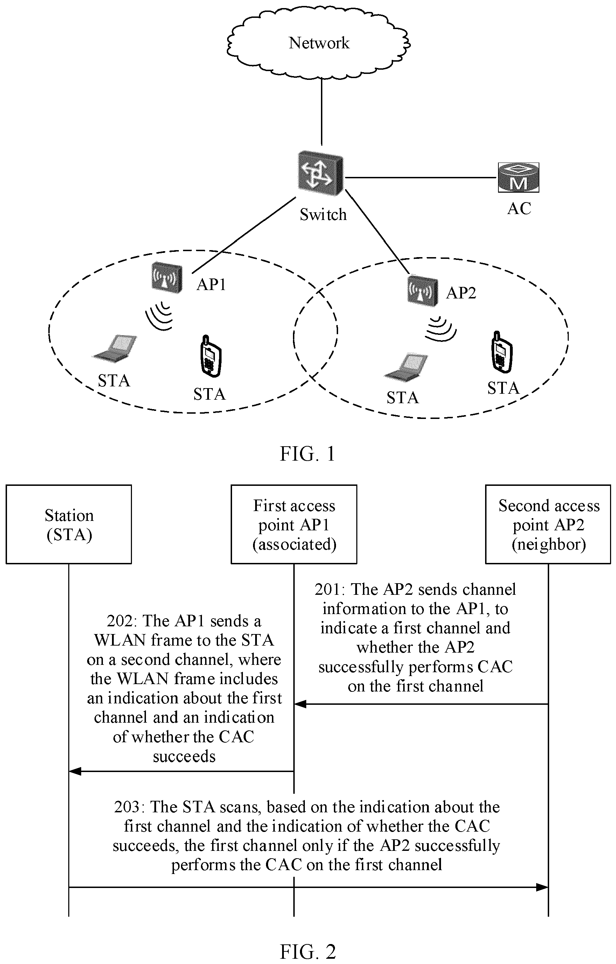

FIG. 1 is a schematic diagram of a structure of a WLAN system according to an embodiment of this application. The system includes an AC, a switch, an AP1, an AP2, and a STA. The AC is connected to the AP1 and the AP2 through the switch, and is responsible for managing the AP 1 and the AP2, for example, radio frequency and authorization management. The switch is responsible for establishing a connection between the AP1 and the network, a connection between the AP2 and the network, and a connection between internal networks within a campus. In addition, the switch is also responsible for management of a routing table, forwarding of a data packet, and other functions. The AP 1 or the AP2 is configured to exchange data with the STA, and is responsible for managing behaviors of the STA, such as dormancy and roaming.

The following describes a mechanism in which the STA scans another channel.

When the STA switches to the another channel, a service on a current operating channel is temporarily interrupted. Therefore, a tradeoff between the scanned channel and the operating channel needs to be maintained. Scanning occasions of the STA may be classified into three types in an existing scanning mechanism: periodic scanning, scanning after quality of a current BSS deteriorates, and scanning after disconnection of the current BSS. Further, the following table shows advantages and disadvantages of the three types of scanning.

**Table 1: Advantages and disadvantages of channel scanning mechanisms**

| Channel scanning mechanisms | Advantages | Disadvantages |
|---|---|---|
| Periodic scanning | Because scanning is always performed, roaming can be initiated immediately after a current BSS deteriorates. This significantly improves roaming | Scanning overheads are huge. |
| | initiative. | |
| Scanning after quality of the current BSS deteriorates | Scanning overheads are significantly reduced compared with those of periodic scanning. | This mechanism is inferior to periodic scanning because of low roaming initiative. Currently, most STAs use this mechanism. |
| Scanning after disconnection of the current BSS | A service is not affected because no scanning is performed during the service. | Scanning is performed only after the disconnection. Service experience of a STA using this mechanism is poor because the service is interrupted for a long time during scanning. Therefore, this mechanism is usually not considered. |

If the STA uses a passive scanning mode, the STA completes scanning on the channel only after receiving a beacon frame. Even if the STA uses an active scanning mode, a specific scanning behavior for a DFS channel is different from that for a non-DFS channel. On the non-DFS channel, there is no need to wait for an AP on the non-DFS channel to send a beacon frame, that is, the STA may send a probe requestframe immediately after switching to the non-DFS channel, to scan the channel. After scanning is completed, the STA returns to an operating channel of an originally associated AP, to process a service on the operating channel. Dwell time of the STA on the non-DFS channel (or referred to as a common channel) is usually 50 ms to 60 ms. If the scanned channel is a DFS channel, it is specified that the STA can start to send a probe request only after receiving the beacon frame broadcast by the AP on the DFS channel. Therefore, dwell time of the STA on the DFS channel is usually 1 to 2 times the dwell time of the common channel, for example, 100 ms to 200 ms.

The embodiments of this application provide the following technical solutions, to avoid the following phenomenon: Because of long dwell time of a STA on a DFS channel, a service between the STA and an originally associated AP is interrupted for a long period of time, leading to frame freezing and affecting user experience.

FIG. 2 is a flowchart of a message sending method according to an embodiment. The method is applied to the foregoing communication system, and is mainly used to indicate a station STA to perform channel scanning on an access point located on a DFS channel. Network elements in the method include a first access point (AP1), a second access point (AP2), and a station (STA). Further, the AP1 is associated with the STA, the AP2 is a neighbor of the AP1, and the AP2 is located on the DFS channel.

Specifically, the method includes the following steps.

Step 201: The second access point AP2 sends channel information to the first access point AP1. Correspondingly, the first access point AP1 receives the channel information from the second access point AP2.

After switching to the DFS channel, the AP2 starts CAC, and sends a channel change message to the AP1, for example, indicates, by using the channel information, to report the DFS channel on which the AP2 is located to the AP1. The channel cannot be used within one minute after the check.

The channel information indicates that an operating channel of the AP2 is a first channel, and whether the AP2 successfully performs CAC on the first channel. The first channel is the DFS channel.

The indicating whether the AP2 successfully performs CAC on the DFS channel specifically includes:

If the indication is "1" or "YES", it indicates that the CAC succeeds.

If the indication is "0" or "NO", it indicates that the CAC fails. Further, the CAC failure includes the following two cases:

In one case, the AP2 fails to complete the CAC on the DFS channel and is still in a 1-minute silent period.

In another case, the AP2 completes the CAC on the DFS channel and finds a radar during the 1-minute silent period.

When either of the foregoing two cases occurs, it indicates that the AP2 fails to perform the CAC on the DFS channel.

Step 202: The first access point AP1 sends, on a second channel, a WLAN frame to the station STA associated with the AP1. Correspondingly, the STA receives, on the second channel, the WLAN frame from the AP1.

The second channel is an operating channel of the AP1.

The WLAN frame includes an indication about the first channel (DFS channel) and an indication of whether the AP2 successfully performs the CAC on the first channel. Specifically, the indication about the DFS channel is the same as an indication about the channel information received by the AP1 in step 201, and is used to determine the DFS channel on which the AP2 is located.

The AP2 may indicate, by using a specific field, whether the AP2 successfully performs the CAC on the DFS channel. For example, a vendor-specific field is used. Content carried in the field includes "1" or "YES", or includes "0" or "NO".

Optionally, in a specific implementation, the STA sends a neighbor report request to the associated AP1. After receiving the request, the AP1 sends a neighbor report to the STA. The neighbor report includes an AP channel report information element and a vendor-specific field. The AP channel report information element includes a channel list (or a channel set). The channel list includes all channels that can be scanned by the STA, including a DFS channel and a non-DFS channel. In this embodiment, the channel list of the AP channel report information element includes the first channel. The vendor-specific field is used to indicate a status of CAC performed by each AP on a corresponding operating channel.

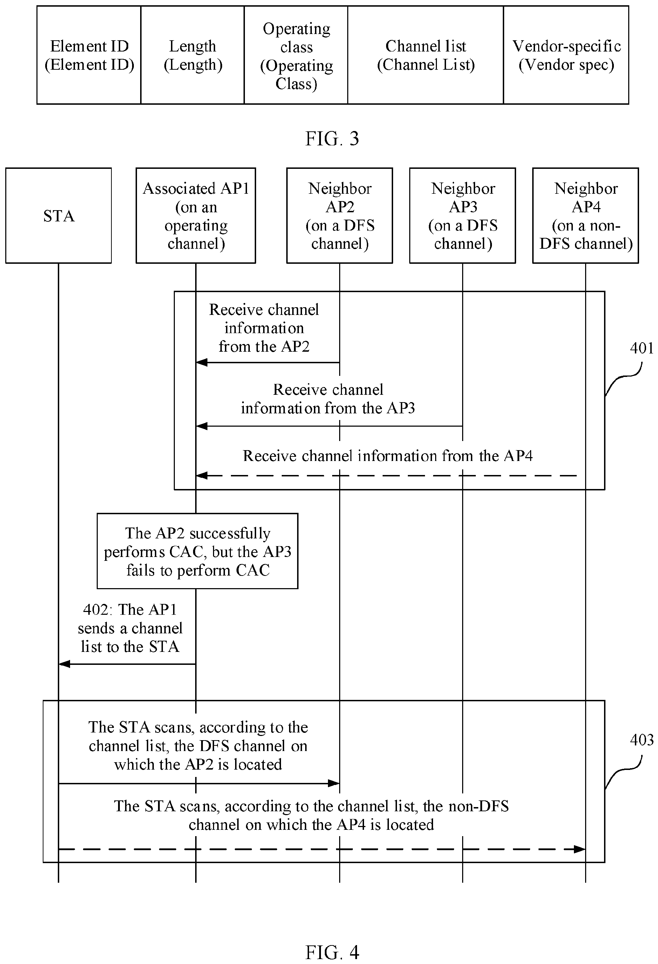

FIG. 3 shows a format of the AP channel report information element. An element ID, a length, an operating class, and a channel list are included. The channel list includes the first channel on which the AP2 is located. In addition, the vendor-specific field may be further included.

Optionally, the AP1 sends the AP channel report information element including the first channel to the STA by using the WLAN frame.

Optionally, the WLAN frame is a management frame, for example, an action frame. The action frame includes the AP channel report information element, or includes the AP channel report information element and the vendor-specific field. The AP1 may send the management frame in a broadcast or unicast manner. This is not limited in this embodiment of this application.

Step 203: The station STA scans, based on the indication about the first channel and the indication of whether the CAC succeeds, the first channel only if the AP2 successfully performs the CAC on the first channel.

Specifically, the STA determines, based on the channel indication in the WLAN frame, the first channel on which the AP2 is located, and determines, based on the indication about the CAC, whether the STA scans the first channel. If the content of the vendor-specific field is "1" or "YES", the STA switches to the first channel, and scans the first channel. If the content of the vendor-specific field is "0" or "NO", the STA does not scan the first channel.

Further, a process of scanning the first channel in step 203 includes: The STA switches to the first channel, and sends a probe request frame on the first channel. The AP2 returns a probe response frame to the STA after receiving the probe request frame. After receiving the probe response frame returned by the AP2, the STA completes scanning on the first channel and returns to the second channel. The second channel is the operating channel of the AP1.

In addition, if the STA does not scan the first channel when the content of the vendor-specific field is "0" or "NO", the method further includes: The AP1 receives the channel information from the AP2 after a period of time, to indicate that the AP2 successfully performs the CAC. In this case, after the AP1 sends, to the STA, the WLAN frame indicating that the AP2 completes the CAC on the first channel, the STA switches to the first channel based on the WLAN frame, and scans the first channel. It should be understood that, because the first channel on which the AP2 is located does not change, a new WLAN frame sent by the AP1 to the STA needs to carry only an indication indicating that the AP2 successfully performs the CAC on the first channel, and does not carry the indication about the first channel. This reduces indication overheads.

Because the STA clearly knows that CAC on the DFS channel scanned by the STA has been performed successfully, the STA does not need to wait for the beacon frame on the channel, but may send the probe request frame immediately after switching to the DFS channel.

According to the method provided in this embodiment, the first access point sends the channel indication to the station associated with the first access point, to indicate whether the neighbor second access point successfully performs the CAC on the DFS channel. In this case, after determining that the second access point successfully performs the CAC, the station switches to the DFS channel on which the second access point is located, and starts to scan the DFS channel. This avoids a waste of air interface resources caused by switching by the station to a DFS channel on which CAC fails. This method increases a success rate of scanning a DFS channel by the station, and further saves air interface resources.

In addition, the station may send the probe request frame immediately after switching to the DFS channel, and start to scan the DFS channel, to reduce waiting time during which the station needs to start to send the probe request frame on the DFS channel only after the second access point sends the beacon frame. This significantly shortens dwell time of the station on the DFS channel, so that the station can return to the original operating channel after scanning the DFS channel. In this way, an interval between services such as voice or video is shortened, avoiding frame freezing of voice or video caused by long dwell time of the station on the DFS channel.

In addition, in this method, time overheads for scanning the DFS channel by the station are reduced without affecting a success rate of scanning the DFS channel by the station.

In addition, the channel list of the WLAN frame sent by the first access point to the station further includes channel information of another access point, for example, a non-DFS channel on which a third access point is located. In this case, after receiving channel information of the third access point, the station scans, according to a non-DFS channel check procedure, the non-DFS channel on which the third access point is located. A specific scanning process is the same as a process in which the STA scans the DFS channel in step 203. Details are not described herein again.

According to the method provided in this embodiment, the associated AP sends a status of CAC performed by the neighbor AP on the DFS channel to the STA. In this case, during channel scanning, the STA does not switch to the DFS channel on which CAC fails, but switches to the DFS channel on which the CAC succeeds. In addition, after the STA switches to the DFS channel on which the CAC succeeds, the STA may send the probe request frame without receiving the beacon frame. In this way, waiting time is reduced, dwell time of the STA on the DFS channel is reduced, and time overheads for scanning the DFS channel by the STA are reduced.

After obtaining channel information sent by an AP associated with a non-DFS channel, the STA switches to the non-DFS channel, and completes scanning on the channel.

This application provides another embodiment. This embodiment is improvement on the foregoing embodiment. The improvement lies in that, for channel information of a DFS channel, the AP1 sends, to the STA, only channel information of an AP that successfully performs CAC. If the neighbor AP2 fails to perform CAC on a channel on which the neighbor AP2 is located, the channel information of the DFS channel is not sent to the STA, to avoid a phenomenon that the WLAN frame further carries indication information of whether CAC succeeds. This further reduces signaling overheads and simplifies a scanning procedure of the STA.

Specifically, as shown in FIG. 4, the method includes the following steps.

Step 401: A first access point receives channel information from at least one neighbor access point whose operating channel is a DFS channel.

The channel information from each neighbor access point is used to indicate an operating channel of a corresponding access point, and whether the corresponding access point successfully performs CAC.

For example, the AP1 receives channel information from a neighbor AP2 on a DFS channel and channel information from a neighbor AP3 on a DFS channel. It is known that the DFS channel on which the AP2 is located is a first channel, and the DFS channel on which the AP3 is located is a second channel. In this case, a channel on which the AP1 is located is a third channel, and the third channel is an operating channel of the AP1 and a STA.

After switching to the second channel, the AP2 performs CAC on the second channel, and sends, to the AP1, an indication about the second channel and an indication of whether CAC on the second channel succeeds. Similarly, after switching to the second channel, the AP3 performs CAC on the second channel, and sends, to the AP1, an indication about the second channel and an indication of whether CAC on the second channel succeeds.

In addition, optionally, the AP1 further receives a channel indication sent by an AP located on a non-DFS channel. For example, an AP4 is located on a non-DFS channel, and it is known that the non-DFS channel is a fourth channel. In this case, the AP4 sends an indication about the fourth channel to the AP1 after switching to the fourth channel.

Step 402: The first access point sends a channel list to the station associated with the first access point. Correspondingly, the station receives the channel list from the first access point.

The channel list includes only an indication about an operating channel of a neighbor access point that successfully performs CAC and an indication about an operating channel of a neighbor access point whose operating channel is a non-DFS channel.

Specifically, the AP1 first receives channel information from all neighbor access points. The channel information includes the channel information from the AP2 on the DFS channel, the channel information from the AP3 on the DFS channel, and channel information from the AP4 on the non-DFS channel. Then, channel information from all APs that successfully perform CAC is filtered. In this embodiment, the AP2 successfully performs the CAC, but the AP3 fails to perform the CAC. Finally, the AP1 sends the channel list to the STA. The channel list includes the first channel (DFS channel) on which the AP2 is located and the fourth channel (non-DFS channel) on which the AP4 is located.

Optionally, the channel list may be carried in the foregoing AP channel report information element, or may be carried in a WLAN frame.

Step 403: The station scans channels in the channel list according to the channel list. The channel list includes the first channel on which the AP2 is located and the fourth channel on which the AP4 is located.

For example, the STA scans the first channel based on the first channel indicated by the channel list. A specific scanning process is the same as step 203 in the foregoing embodiment, and details are not described herein again. Similarly, after scanning the first channel, the STA returns to the third channel on which the AP1 is located, and then switches to the fourth channel to scan the fourth channel. Specifically, for a process in which the STA scans the fourth channel, refer to an existing process in which the STA scans a non-DFS channel. Details are not described in this embodiment.

In addition, if the AP1 receives indication information from the AP3 indicating that the CAC succeeds, the AP1 adds the second channel on which the AP3 is located to the channel list, and delivers the channel list to the STA, so that the STA scans the second channel.

In this embodiment, for a station associated with a neighbor AP that fails to perform CAC, the associated AP1 delivers, to the station only after the neighbor AP successfully performs CAC, information about a DFS channel on which the neighbor AP is located, instead of delivering channel information to the station. Compared with Embodiment 1 in which the WLAN frame carries indication information of whether a neighbor AP performs CAC, this embodiment reduces content of a message sent to the STA. In this way, transmission overheads are reduced, and a procedure of the STA is simplified.

The following describes apparatus embodiments corresponding to the foregoing method embodiments.

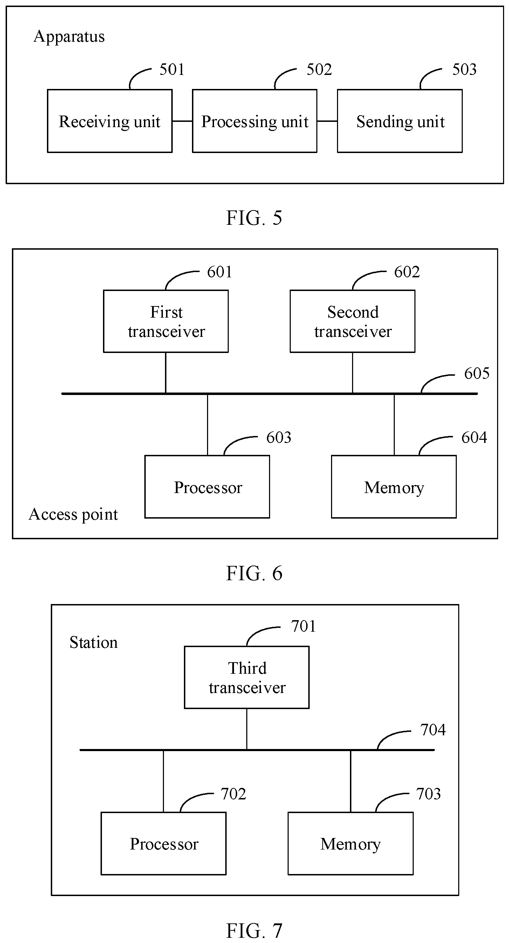

FIG. 5 is a schematic diagram of a structure of an apparatus according to an embodiment of this application. The apparatus may be a channel indication sending apparatus or a channel scanning apparatus, and is configured to implement the methods in FIG. 2 and FIG. 4 in the foregoing embodiments.

Further, as shown in FIG. 5, the apparatus may include a receiving unit 501, a processing unit 502, and a sending unit 503. In addition, the apparatus may further include a storage unit or another unit or module. This is not limited in this embodiment.

When the apparatus is used as a channel indication sending apparatus, for example, the sending apparatus is a first access point,
the receiving unit 501 is configured to receive channel information from a second access point. The channel information indicates that an operating channel of the second access point is a first channel, and whether the second access point successfully performs CAC on the first channel, the second access point is a neighbor of the first access point, and the first channel is a DFS channel.

The sending unit 503 is configured to send, on a second channel, a WLAN frame to a station associated with the first access point. The second channel is an operating channel of the first access point. The WLAN frame includes an indication about the first channel and an indication of whether the second access point successfully performs the CAC on the first channel.

Optionally, the first channel is in a channel report information element.

When the apparatus is used as a channel scanning apparatus, for example, the channel scanning apparatus is a station,
the receiving unit 501 is configured to receive a WLAN frame from a first access point. The WLAN frame includes an indication about a first channel on which a second access point operates and an indication of whether the second access point successfully performs CAC on the first channel, and the first channel is a DFS channel.

The processing unit 502 is configured to scan, based on the indication about the first channel and the indication of whether the CAC succeeds, the first channel only if the second access point successfully performs the CAC on the first channel.

Optionally, in a specific implementation, the processing unit 502 is specifically configured to: switch to the first channel; send a probe request to the second access point on the first channel by using the sending unit 503; and after the receiving unit 501 receives a probe response returned by the second access point, completes scanning on the first channel, and returns to the operating channel of the first access point.

When the apparatus is used as a channel indication sending apparatus, for example, the sending apparatus is a first access point,
the receiving unit 501 is configured to receive channel information from at least one neighbor access point whose operating channel is a DFS channel. The channel information from each neighbor access point is used to indicate an operating channel of a corresponding access point, and whether the corresponding access point successfully performs CAC. The sending unit 503 is configured to send a channel list to a station associated with the first access point. The channel list includes only an indication about an operating channel of a neighbor access point that successfully performs CAC and an indication about an operating channel of a neighbor access point whose operating channel is a non-DFS channel.

During specific implementation, an embodiment of this application further provides an access point. FIG. 6 is a schematic diagram of a structure of an access point according to an embodiment of this application. The access point may be any one of an AP1, an AP2, and an AP3, to implement the functions or operations of the access point in the foregoing embodiments.

As shown in FIG. 6, the access point may include a first transceiver 601, a second transceiver 602, a processor 603, a memory 604, and a bus 605. In addition, the access point may further include more or fewer components such as a power supply module and an antenna, combine some components, or have different component arrangements. This is not limited in this application.

The first transceiver 601 is configured to communicate with another neighbor access point. Specifically, the first transceiver 601 is configured to receive channel information from a second access point. The channel information indicates that an operating channel of the second access point is a first channel, and whether the second access point successfully performs CAC on the first channel.

The second transceiver 602 is configured to communicate with an associated station. Specifically, the second transceiver 602 is configured to send a WLAN frame to the station on a second channel. The WLAN frame includes an indication about the first channel and an indication of whether the second access point successfully performs the CAC on the first channel.

In addition, in the method procedure shown in FIG. 4, the first transceiver 601 is configured to receive channel information from at least one neighbor access point whose operating channel is a DFS channel. The channel information from each neighbor access point is used to indicate an operating channel of a corresponding access point, and whether the corresponding access point successfully performs CAC.

The second transceiver 602 is configured to send a channel list to a station associated with the first access point. The channel list includes only an indication about an operating channel of a neighbor access point that successfully performs CAC and an indication about an operating channel of a neighbor access point whose operating channel is a non-DFS channel.

The processor 603 is configured to control the first transceiver 601 and the second transceiver 602 to perform the method procedures performed by the first access points in FIG. 2 and FIG. 4.

During specific implementation, the first transceiver 601 is a wired communication interface, and the access point may be connected (directly connected, or connected by using a switch or an AC) to another AP through the wired communication interface.

The second transceiver 602 is configured to establish a communication channel, so that an access point implements communication transmission with another terminal device (for example, a STA) through the communication channel. Further, the second transceiver 602 includes a transceiver module, for example, may include a WLAN module, and a corresponding radio frequency (RF) circuit. The RF circuit is configured to perform WLAN communication.

The processor 603 is a control center of the access point, and connects to all components of the entire device through various interfaces and the communication bus 605. The processor 603 runs or executes a software program or module stored in the memory 604, and invokes data stored in the memory 604, to perform various functions of the access point or process data.

The processor 603 may be a central processing unit (CPU), a network processor (NP), or a combination of a CPU and an NP. The processor 603 may further include a hardware chip. The hardware chip may be an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof. In addition, the processor 603 further includes an RF circuit and a baseband chip.

The memory 604 may include a volatile memory, for example, a random access memory (RAM); or may include a non-volatile memory, for example, a flash memory, a hard disk drive (HDD), or a solid-state drive (SSD). The memory may alternatively include a combination of the foregoing types of memories. The memory may store a program, code, or data. The processor 603 may implement functions of the access point by executing the program or the code.

Further, functions to be implemented by the receiving unit 501 and the sending unit 503 in FIG. 5 may be implemented by the first transceiver 601 or the second transceiver 602 of the access point, or implemented by the first transceiver 601 and the second transceiver 602 that are controlled by the processor 603. Functions to be implemented by the processing unit 502 may be implemented by the processor 603.

In addition, an embodiment of this application further provides a computer storage medium. The computer storage medium may store program instructions. When the program instructions are executed, some or all of the steps in the embodiments of the channel indication sending method and the channel scanning method that are provided in this application may be performed. The computer storage medium may be the memory 604. In addition, the program instructions stored in the memory 604 may be transmitted from one network node, computer, server, or data center to another node, computer, or server in a wired or wireless manner.

All or some of the foregoing embodiments may be implemented by using software, hardware, firmware, or any combination thereof. When software is used to implement the embodiments, all or some of the embodiments may be implemented in a form of a computer program product.

An embodiment of this application further provides a terminal device. The terminal device is configured to implement functions or operations of the stations in the foregoing embodiments. Further, as shown in FIG. 7, the station includes a third transceiver 701, a processor 702, a memory 703, a bus 704, and the like. The processor 702 is coupled to the memory 703 through the bus 704.

Further, the third transceiver 701 is configured to receive a WLAN frame from a first access point. The WLAN frame includes an indication about a first channel on which a second access point operates and an indication of whether the second access point successfully performs CAC on the first channel, and the first channel is a DFS channel. The processor 702 is configured to scan, based on the indication about the first channel and the indication of whether the CAC succeeds, the first channel only if the second access point successfully performs the CAC on the first channel.

The memory 703 stores computer program instructions. When the processor 702 invokes and executes the computer program instructions, the station is enabled to implement the channel scanning method in FIG. 2 or FIG. 4.

Further, the third transceiver 701 is configured to communicate with an access point that is associated with or is adjacent to the third transceiver 701. Further, the third transceiver 701 may include a transceiver module, an antenna, and the like. A structure of the memory 703 is the same as a structure of the memory 604 shown in FIG. 6, and a structure of the processor 702 is the same as a structure of the processor 603 of the access point. Refer to the foregoing description of the structures of the processor 603 and the memory 604. Details are not described again in this embodiment.

This embodiment further provides a WLAN system. The WLAN system may be the system shown in FIG. 1, and is configured to implement the method described in FIG. 2 or FIG. 4. Specifically, the system includes at least two access points and at least one station. In addition, the system may further include other network devices, such as a switch and an AC.

In the specification, claims, and accompanying drawings of this application, the terms "first", "second", "third", and so on are intended to distinguish between similar objects but do not necessarily indicate a specific order or sequence. It should be understood that the data termed in such a way are interchangeable in proper circumstances so that the embodiments described herein can be implemented in other orders than the order illustrated or described herein.

For same or similar parts in the embodiments, refer to these embodiments. Especially, the embodiments related to the network device/node or apparatus/device are basically similar to the method embodiments, and therefore are described briefly. For related parts, refer to the description in the method embodiments.

## Claims

1. A channel indication sending method, wherein the method comprises:
receiving (201), by a first access point, channel information from a second access point, wherein the channel information indicates that an operating channel of the second access point is a first channel, and whether the second access point successfully performs channel availability check, CAC, on the first channel, wherein the second access point is a neighbor of the first access point, and the first channel is a dynamic frequency selection, DFS, channel; and
sending (202), by the first access point on a second channel, a wireless local area network, WLAN, frame to a station associated with the first access point, wherein the second channel is an operating channel of the first access point, and the WLAN frame comprises an indication about the first channel and an indication of whether the second access point successfully performs the CAC on the first channel.

2. The method according to claim 1, wherein the first channel is in a channel report information element.

3. A channel scanning method, wherein the method comprises:
receiving (202), by a station, a wireless local area network, WLAN, frame from a first access point, wherein the WLAN frame comprises an indication about a first channel on which a second access point operates and an indication of whether the second access point successfully performs channel availability check, CAC, on the first channel, and the first channel is a dynamic frequency selection, DFS, channel; and
scanning (203), by the station based on the indication about the first channel and the indication of whether the CAC succeeds, the first channel only if the second access point successfully performs the CAC on the first channel.

4. The method according to claim 3, wherein the first channel is in a channel report information element.

5. The method according to claim 3 or 4, wherein the scanning the first channel comprises:
sending, by the station, a probe request on the DFS channel immediately after the station switches to the DFS channel on which the CAC succeeds.

6. An access point, wherein the access point is a first access point, and the first access point comprises:
a first transceiver (601), configured to receive channel information from a second access point, wherein the channel information indicates that an operating channel of the second access point is a first channel, and whether the second access point successfully performs channel availability check, CAC, on the first channel, wherein the second access point is a neighbor of the first access point, and the first channel is a dynamic frequency selection, DFS, channel; and
a second transceiver (602), configured to send, on a second channel, a WLAN frame to a station associated with the first access point, wherein the second channel is an operating channel of the first access point, and the wireless local area network, WLAN, frame comprises an indication about the first channel and an indication of whether the second access point successfully performs the CAC on the first channel.

7. The access point according to claim 6, wherein the first channel is in a channel report information element.

8. A station, wherein the station comprises:
a third transceiver (701), configured to receive a wireless local area network, WLAN, frame from a first access point, wherein the WLAN frame comprises an indication about a first channel on which a second access point operates and an indication of whether the second access point successfully performs channel availability check, CAC, on the first channel, and the first channel is a dynamic frequency selection, DFS, channel; and
a processor (702), configured to scan, based on the indication about the first channel and the indication of whether the CAC succeeds, the first channel only if the second access point successfully performs the CAC on the first channel.

9. The station according to claim 8, wherein the first channel is in a channel report information element.

10. The station according to claim 8 or 9, wherein
the processor (702) is specifically configured to send a probe request on the DFS channel immediately after the station switches to the DFS channel on which the CAC succeeds.

11. A computer-readable storage medium, wherein the computer-readable storage medium stores computer program instructions; and
when the computer program instructions are run, the method according to any one of claims 1 to 5 is implemented.

12. A communication system comprising:
a first access point according to any one of claims 6 or 7;
a second access point, wherein the second access point is a neighbor of the first access point and a channel on which the second access point is located is a DFS channel; and
a station.

## Patentansprüche

1. Kanalangabesendeverfahren, wobei das Verfahren Folgendes umfasst:
Empfangen (201), durch einen ersten Zugangspunkt, von Kanalinformationen von einem zweiten Zugangspunkt, wobei die Kanalinformationen angeben, dass ein Arbeitskanal des zweiten Zugangspunkts ein erster Kanal ist, und ob der zweite Zugangspunkt eine Kanalverfügbarkeitsprüfung bzw. CAC an dem ersten Kanal erfolgreich durchführt, wobei der zweite Zugangspunkt ein Nachbar des ersten Zugangspunkts ist und der erste Kanal ein Dynamische-Frequenzauswahl- bzw. DFS-Kanal ist; und
Senden (202), durch den ersten Zugangspunkt auf einem zweiten Kanal, eines "Wireless-Local-Area-Network"- bzw. WLAN-Frames an eine mit dem ersten Zugangspunkt assoziierte Station, wobei der zweite Kanal ein Arbeitskanal des ersten Zugangspunkts ist und der WLAN-Frame eine Angabe über den ersten Kanal und eine Angabe darüber, ob der zweite Zugangspunkt die CAC an dem ersten Kanal erfolgreich durchführt, umfasst.

2. Verfahren nach Anspruch 1, wobei sich der erste Kanal in einem Kanalmeldungsinformationselement befindet.

3. Kanalscanverfahren, wobei das Verfahren Folgendes umfasst:
Empfangen (202), durch eine Station, eines "Wireless-Local-Area-Network"- bzw. WLAN-Frames von einem ersten Zugangspunkt, wobei der WLAN-Frame eine Angabe über einen ersten Kanal, auf dem ein zweiter Zugangspunkt arbeitet, und eine Angabe darüber, ob der zweite Zugangspunkt eine Kanalverfügbarkeitsprüfung bzw. CAC an dem ersten Kanal erfolgreich durchführt, umfasst und der erste Kanal ein Dynamische-Frequenzauswahl- bzw. DFS-Kanal ist; und
Scannen (203), durch die Station basierend auf der Angabe über den ersten Kanal und der Angabe darüber, ob die CAC erfolgreich ist, des ersten Kanals nur dann, wenn der zweite Zugangspunkt die CAC an dem ersten Kanal erfolgreich durchführt.

4. Verfahren nach Anspruch 3, wobei sich der erste Kanal in einem Kanalmeldungsinformationselement befindet.

5. Verfahren nach Anspruch 3 oder 4, wobei das Scannen des ersten Kanals Folgendes umfasst:
Senden, durch die Station, einer Sondierungsanforderung auf dem DFS-Kanal unmittelbar nachdem die Station auf den DFS-Kanal wechselt, auf dem die CAC erfolgreich ist.

6. Zugangspunkt, wobei der Zugangspunkt ein erster Zugangspunkt ist und der erste Zugangspunkt Folgendes umfasst:
einen ersten Sendeempfänger (601), ausgelegt zum Empfangen von Kanalinformationen von einem zweiten Zugangspunkt, wobei die Kanalinformationen angeben, dass ein Arbeitskanal des zweiten Zugangspunkts ein erster Kanal ist, und ob der zweite Zugangspunkt eine Kanalverfügbarkeitsprüfung bzw. CAC an dem ersten Kanal erfolgreich durchführt, wobei der zweite Zugangspunkt ein Nachbar des ersten Zugangspunkts ist und der erste Kanal ein Dynamische-Frequenzauswahl- bzw. DFS-Kanal ist; und
einen zweiten Sendeempfänger (602), ausgelegt zum Senden, auf einem zweiten Kanal, eines WLAN-Frames an eine mit dem ersten Zugangspunkt assoziierte Station, wobei der zweite Kanal ein Arbeitskanal des ersten Zugangspunkts ist und der "Wireless-Local-Area-Network"- bzw. WLAN-Frame eine Angabe über den ersten Kanal und eine Angabe darüber, ob der zweite Zugangspunkt die CAC an dem ersten Kanal erfolgreich durchführt, umfasst.

7. Zugangspunkt nach Anspruch 6, wobei sich der erste Kanal in einem Kanalmeldungsinformationselement befindet.

8. Station, wobei die Station Folgendes umfasst:
einen dritten Sendeempfänger (701), ausgelegt zum Empfangen eines "Wireless-Local-Area-Network"- bzw. WLAN-Frames von einem ersten Zugangspunkt, wobei der WLAN-Frame eine Angabe über einen ersten Kanal, auf dem ein zweiter Zugangspunkt arbeitet, und eine Angabe darüber, ob der zweite Zugangspunkt eine Kanalverfügbarkeitsprüfung bzw. CAC an dem ersten Kanal erfolgreich durchführt, umfasst und der erste Kanal ein Dynamische-Frequenzauswahl- bzw. DFS-Kanal ist; und
einen Prozessor (702), ausgelegt zum Scannen, basierend auf der Angabe über den ersten Kanal und der Angabe darüber, ob die CAC erfolgreich ist, des ersten Kanals nur dann, wenn der zweite Zugangspunkt die CAC an dem ersten Kanal erfolgreich durchführt.

9. Station nach Anspruch 8, wobei sich der erste Kanal in einem Kanalmeldungsinformationselement befindet.

10. Station nach Anspruch 8 oder 9, wobei
der Prozessor (702) insbesondere ausgelegt ist zum Senden einer Sondierungsanforderung auf dem DFS-Kanal unmittelbar nachdem die Station auf den DFS-Kanal wechselt, auf dem die CAC erfolgreich ist.

11. Computerlesbares Speichermedium, wobei das computerlesbare Speichermedium Computerprogrammanweisungen speichert; und
wenn die Computerprogrammanweisungen ausgeführt werden, das Verfahren nach einem der Ansprüche 1 bis 5 implementiert wird.

12. Kommunikationssystem, das Folgendes umfasst:
einen ersten Zugangspunkt nach einem der Ansprüche 6 oder 7;
einen zweiten Zugangspunkt, wobei der zweite Zugangspunkt ein Nachbar des ersten Zugangspunkts ist und ein Kanal, auf dem sich der zweite Zugangspunkt befindet, ein DFS-Kanal ist; und
eine Station.

## Revendications

1. Procédé d'envoi d'indication de canal, le procédé comprenant :
la réception (201), par un premier point d'accès, d'informations de canal depuis un deuxième point d'accès, les informations de canal indiquant qu'un canal en exploitation du deuxième point d'accès est un premier canal, et si le deuxième point d'accès a réussi un contrôle de disponibilité de canal, noté CAC, sur le premier canal, le deuxième point d'accès étant voisin du premier point d'accès, et le premier canal étant un canal à sélection dynamique de fréquence, notée DFS ; et
l'envoi (202), par le premier point d'accès sur un deuxième canal, d'une trame de réseau local sans fil, noté WLAN, à une station associée au premier point d'accès, le deuxième canal étant un canal en exploitation du premier point d'accès, et la trame WLAN comprenant une indication concernant le premier canal et une indication si le deuxième point d'accès a réussi le CAC sur le premier canal.

2. Procédé selon la revendication 1, le premier canal étant contenu dans un élément d'information de rapport de canal.

3. Procédé de balayage de canal, le procédé comprenant :
la réception (202), par une station, d'une trame de réseau local sans fil, noté WLAN, depuis un premier point d'accès, la trame WLAN comprenant une indication concernant un premier canal exploité par un deuxième point d'accès et une indication si le deuxième point d'accès a réussi un contrôle de disponibilité de canal, noté CAC, sur le premier canal, et le premier canal étant un canal à sélection dynamique de fréquence, notée DFS ; et
le balayage (203), par la station sur la base de l'indication concernant le premier canal et de l'indication si le CAC a réussi, du premier canal uniquement si le deuxième point d'accès a réussi le CAC sur le premier canal.

4. Procédé selon la revendication 3, le premier canal étant contenu dans un élément d'information de rapport de canal.

5. Procédé selon la revendication 3 ou 4, le balayage du premier canal comprenant :
l'envoi, par la station, d'une requête de sondage sur le canal DFS immédiatement après que la station a commuté sur le canal DFS sur lequel le CAC a réussi.

6. Point d'accès, le point d'accès étant un premier point d'accès, et le premier point d'accès comprenant :
un premier émetteur-récepteur (601), configuré pour recevoir des informations de canal depuis un deuxième point d'accès, les informations de canal indiquant qu'un canal en exploitation du deuxième point d'accès est un premier canal, et si le deuxième point d'accès a réussi un contrôle de disponibilité de canal, noté CAC, sur le premier canal, le deuxième point d'accès étant voisin du premier point d'accès, et le premier canal étant un canal à sélection dynamique de fréquence, notée DFS ; et
un deuxième émetteur-récepteur (602), configuré pour envoyer, sur un deuxième canal, une trame WLAN à une station associée au premier point d'accès, le deuxième canal étant un canal en exploitation du premier point d'accès, et la trame de réseau local sans fil, noté WLAN, comprenant une indication concernant le premier canal et une indication si le deuxième point d'accès a réussi le CAC sur le premier canal.

7. Point d'accès selon la revendication 6, le premier canal étant contenu dans un élément d'information de rapport de canal.

8. Station, la station comprenant :
un troisième émetteur-récepteur (701), configuré pour recevoir une trame de réseau local sans fil, noté WLAN, depuis un premier point d'accès, la trame WLAN comprenant une indication concernant un premier canal exploité par un deuxième point d'accès et une indication si le deuxième point d'accès a réussi un contrôle de disponibilité de canal, noté CAC, sur le premier canal, et le premier canal étant un canal à sélection dynamique de fréquence, notée DFS ; et
un processeur (702), configuré pour balayer, sur la base de l'indication concernant le premier canal et de l'indication si le CAC a réussi, le premier canal uniquement si le deuxième point d'accès a réussi le CAC sur le premier canal.

9. Station selon la revendication 8, le premier canal étant contenu dans un élément d'information de rapport de canal.

10. Station selon la revendication 8 ou 9,
le processeur (702) étant plus particulièrement configuré pour envoyer une requête de sondage sur le canal DFS immédiatement après que la station a commuté sur le canal DFS sur lequel le CAC a réussi.

11. Support de stockage lisible par ordinateur, le support de stockage lisible par ordinateur stockant des instructions de programme d'ordinateur ; et
l'exécution des instructions de programme d'ordinateur mettant en oeuvre le procédé selon l'une quelconque des revendications 1 à 5.

12. Système de communication, comprenant :
un premier point d'accès selon l'une quelconque des revendications 6 ou 7 ;
un deuxième point d'accès, le deuxième point d'accès étant voisin du premier point d'accès et un canal sur lequel le deuxième point d'accès est positionné étant un canal DFS ; et
une station.
